# EUROPEAN PATENT SPECIFICATION

(11) **EP 1 150 839 B1**
(45) Date of publication and mention of the grant of the patent: **06.10.2004**
(21) Application number: 00906847.9
(22) Date of filing: 08.02.2000
(51) Int. Cl.: B32B 31/00

(54) **CHUCK**
SPANNFUTTER
MANDRIN

(30) Priority: 09.02.1999 SE 9900419
(43) Date of publication of application: 07.11.2001
(73) Proprietor: SANDVIK AKTIEBOLAG, 811 81 Sandviken (SE)
(72) Inventor: HEDBERG, Anna, S-811 39 Sandviken (SE)
(86) International application number: PCT/SE2000/000248
(87) International publication number: WO 2000/047411

(56) References cited:
- WO-A1-90/01387
- DE-C1- 361 919
- US-A- 4 021 051

## Description

### Technical Field of the Invention

The present invention relates to a chuck including a sleeve, a tool-receiving part as well as a coupling part, the tool-receiving part and the coupling part being made integrally, so that the tool receiving part, in the area of the end thereof turned from the coupling part, has an axially extending recess, which is intended to receive a tool, and that the sleeve consists of a separate element and that the tool receiving part, in the area for the recess, is externally conical, and that an internal limiting wall in the sleeve is conical.

### Prior Art

There is a plurality of types of known chucks that work in principly different ways. A brief account of some common types is given in the special description part below, these being illustrated by means of figures. A chuck according to the preamble of claim 1 is known from US-A-4 021 051.

As additional examples of the prior art, reference is made to the CH patent specification 363 541, a clamping sleeve being known previously from said document, which is intended to be used in the manufacture of couplings, seals or the like. Thus, it is not a question of a chuck/tool holder. Generally, the shank or the like which is to be connected is surrounded by a sleeve of a deformable material, for instance plastic.

### Aims and Features of the Invention

A primary aim of the present invention is to describe a chuck of the kind defined in the introduction, which generates high clamping forces, i.e. it gives an accurate and stable clamping of the tool, in spite of it being of exceptionally simple design.

Another aim of the invention is that the chuck should be relatively slender, which ensures good accessibility during machining.

Yet another aim of the invention is that the chuck should be cheap to manufacture.

Yet an additional aim of the invention is that the chuck should be user-friendly, especially in connection with tool changing.

The aims of the present invention are realized by means of a chuck having the features defined in the subsequent claim 1. Preferred embodiments of the invention are defined in the dependent claims.

### Brief Description of the Drawings

A number of examples of the state of the art as well as a number of embodiments of the chuck according to the present invention will be described below with reference to the appended drawings, in which
- Figs 1a-1e: show schematically some known types of chucks;
- Fig 2: shows schematically a cross section through a first embodiment of the chuck according to the present invention;
- Fig 3: shows schematically a cross section through a second embodiment of the chuck according to the present invention;
- Fig 4: shows an exploded view of the embodiment according to Fig 2;
- Fig 5: shows schematically a cross section through a third embodiment of the chuck according to the present invention;
- Fig 6: shows schematically a cross section through a fourth embodiment of the chuck according to the present invention;
- Fig 7: shows an exploded view of the embodiment according to Fig 5; and
- Fig 8: shows an exploded view of a modified variant of the embodiment according to Fig 5.

### Description of the prior art as well as preferred embodiments of the chuck according to the present invention

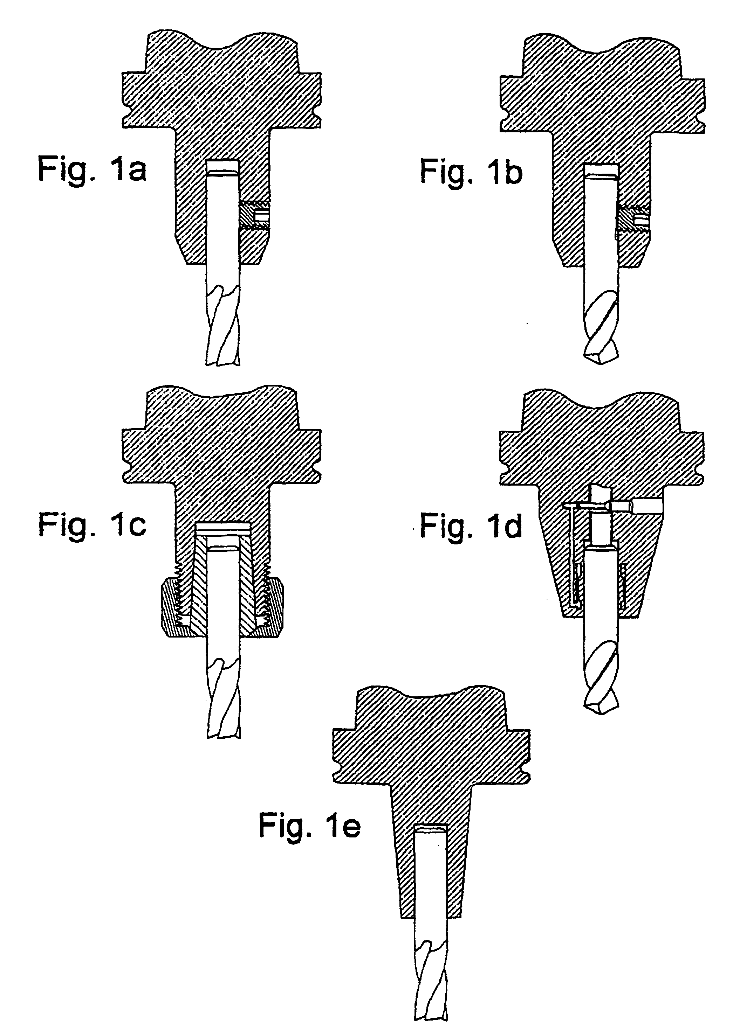

In fig 1a, a chuck of the "Weldon" type is shown. In this type of chuck, a radial screw is used, which clamps the tool by acting on one or more planes being arranged on the shank of the tool. This type of chuck is structurally simple, but the screw and the fixing point thereof are exposed to high stress and rigidity of the chuck varies in different loading directions. The shank of the tool has to be provided with a ground plane, which increases the manufacturing cost for the tool at the same time as it constitutes a weakening of the shank of the tool.

In fig 1b, a chuck of the "Whistle Notch" type is shown, the chucks of this type being structurally much of the same shape as "Weldon"-chucks, but the plane on the shank of the tool is so oriented that the force which the screw exerts on the shank of the tool has a component, which is directed from the free end of the tool, in the axial direction of the same.

In fig 1c, a collet chuck is shown, which is a mechanical chuck which comprises a threaded sleeve as well as a cone-shaped loose sleeve, a threaded jamb nut which co-operates with the threaded sleeve being axially displaced and displaces, in turn, the loose cone-shaped sleeve, which brings about a clamping of the tool. This type of chucks is stiff in the radial direction but the clamping force that may be achieved is limited and the chuck is not particularly slender.

In fig 1d, a hydraulic chuck is shown, this type of chuck commonly comprises a metal diaphragm which surrounds the shank of the tool, a hydraulic pressure is applied to said metal diaphragm and it is pressed against the tool, which results in the clamping thereof. This type of chuck may be made relatively slender, but it is relatively weak in the radial direction since the diaphragm commonly permits a certain motion of the tool.

In fig 1e, a shrink-on chuck is shown, which is based on the principle that the chuck is widened by heating, a clamping of the tool being obtained when the chuck cools down. This principle gives good clamping forces, but tool changing is time-consuming since the chuck has to be heated and then cooled down again before it may be used.

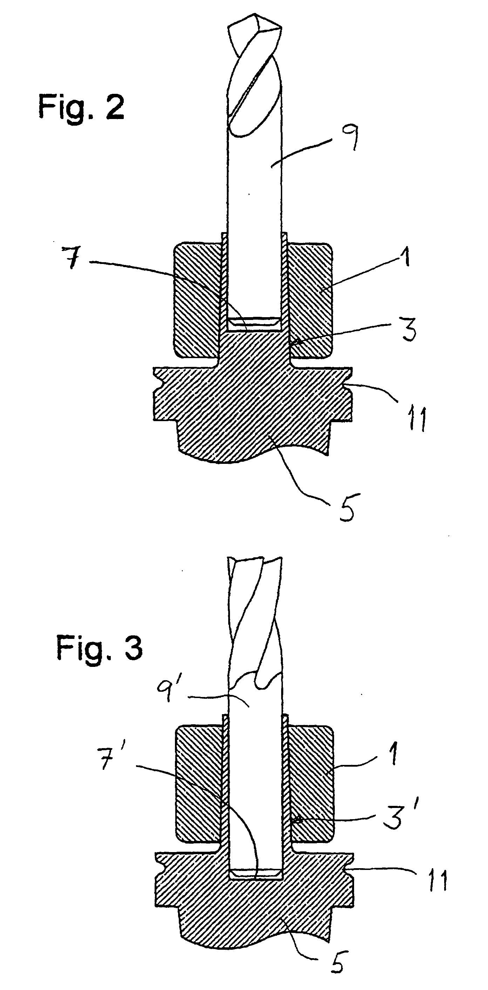

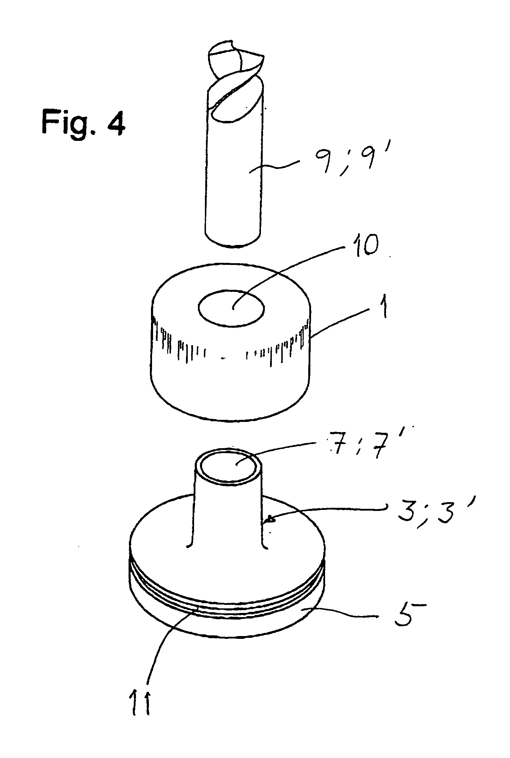

The embodiment shown schematically in figs 2 and 4 of the chuck according to the present invention comprises a sleeve 1, a tool-receiving part 3 as well as a coupling part 5, which, for instance, is included as a part of a tool holder of the ISO cone, COROMANT CAPTO® type or another suitable holder, by means of which the chuck is clamped in a spindle. The tool-receiving part 3 comprises a recess 7, a tool 9, in this case a drill, being received in said recess 7. The recess 7 has, in the embodiment according to fig 2, a relatively brief axial extension, i.e. said recess 7 extends only along a part of the axial length of the tool-receiving part 3.

Externally, in the area for the recess 7, the tool-receiving part 3 has a slightly conical shape, whereby the cone angle should, according to the concept of the present invention, be in the interval 0,3-15°, and preferably in the interval 1-10°. Generally, it may be said that the tool-receiving part 3 has thin walls, which is an important feature if a good function of the chuck according to the present invention is to be obtained.

The sleeve 1 has an internal through limiting wall 10, which also is slightly cone-shaped and has a cone angle which in principle corresponds to the cone angle of the tool-receiving part 3. Externally, the sleeve 1 in the shown embodiment has a circular cylindrical shape, which, however, does not have any direct importance for the function of the chuck, but the sleeve has to be so formed concerning the thickness and choice of material that it resists the stress which arises when the chuck is in the active position, which is described in more detail below. It is also important that the sleeve 1 is so formed externally that it may be clamped in a fixed position in connection with the sleeve 1 and the tool-receiving part 3 being displaced axially in relation to each other, see below, for mounting and dismounting of tool.

The embodiment according to fig 3 differs from the embodiment according to fig 2 in the fact that the recess 7' has a larger extension in the axial direction than the recess 7. As may be seen in fig 3, the recess 7' extends into the coupling part 5, which means that the tool-receiving part 3' gets a longer active axial extension.

In principle, the embodiments according to figs 2 and 3 work in the same way, the mounting of a tool in the chuck according to figs 2 and 3 being so arranged that the tool 9; 9' is placed in the recess 7; 7' in the tool-receiving part 3; 3'. Then the sleeve 1 is displaced up across the external cone-shaped tool-receiving part 3; 3', in the direction from the free end thereof towards the coupling part 5, the thin-walled tool-receiving part 3; 3' in that connection being somewhat elastically deformed while generating a clamping force acting on the tool 9; 9'. The actual displacement of the sleeve 1 in relation to the tool receiving part 3; 3' may take place in various ways using suitable equipment. The principle should be that the sleeve 1 and the tool-receiving part 3; 3' individually are clamped in fixed positions, and then a force is applied which causes a mutual axial relative displacement of the sleeve 1 and the tool-receiving part 3; 3'. The clamping of the tool-receiving part 3; 3' may take place by means of the commonly occurring gripper groove 11 in the coupling part 5 while the clamping of the sleeve 1 may take place by means of flanges or by means of one or more grooves on the outside thereof which fit against corresponding groove or grooves in the imaginary mounting fixture. The requisite force to bring about the relative displacement in question of the sleeve 1 and the tool-receiving part 3; 3' may be achieved in, for instance, a hydraulic, pneumatic or mechanical (for instance lever arm) way.

In the case that the relative displacement entails the sleeve 1 being displaced in the direction towards the coupling part 5, a clamping force will be exerted on the tool 9; 9' in the tool-receiving part 3; 3'. The principle of the invention is that the cone angle of the tool-receiving part 3; 3' and the internal limiting wall 10 of the sleeve 1 is so small that it is self-inhibiting, i.e. the sleeve 1 is kept in place by the friction. As already has been pointed out above, the cone angle should be in the interval 0,3-15°, and preferably in the interval 1-10°. The angle that is chosen within the interval, depends on the friction there is in the contact between the cone-shaped surfaces, this friction in turn depending on the nature of the surfaces as well as possible coatings which may be used.

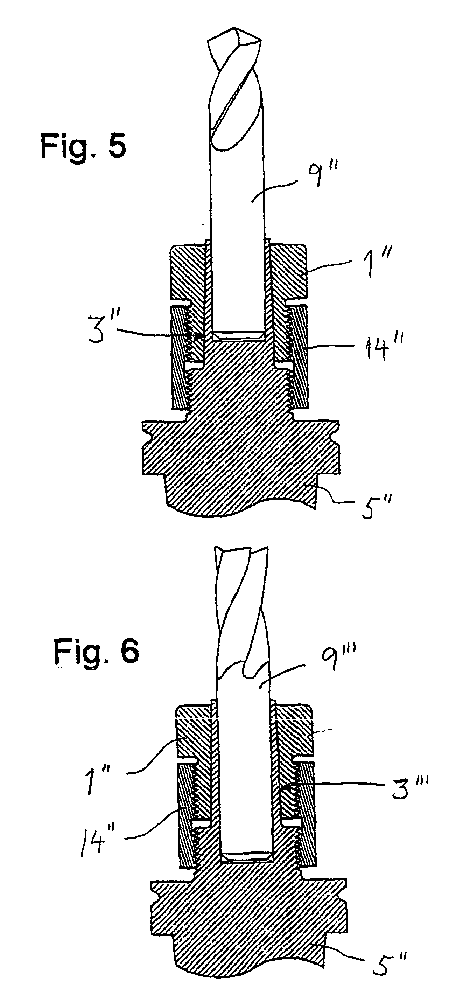

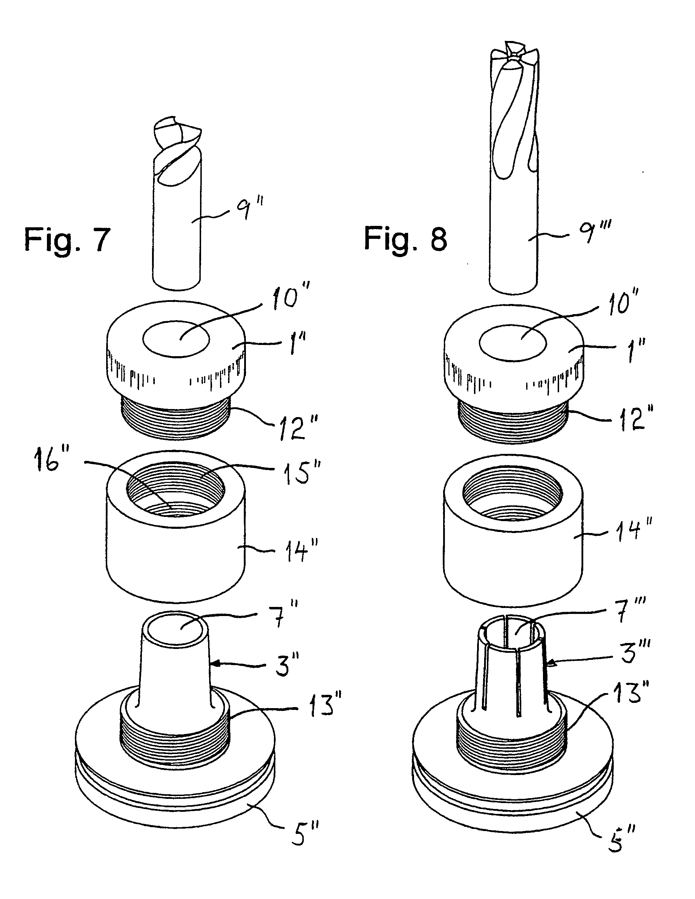

In the embodiment shown in figs 5 and 7 of the chuck according to the present invention, the sleeve 1" is provided with a first external thread 12" at the end of the sleeve 1" which is turned towards the coupling part 5".

The tool-receiving part 3" is, in the embodiment according to figs 5 and 7, in principle the same shape as the tool-receiving part 3 in the embodiment according to fig 2, but the tool-receiving part 3" according to fig 5 has a second external thread 13" adjacent to the coupling part 5".

The chuck according to figs 5 and 7 also comprises a clamping sleeve 14" having two internal threads 15" and 16", which are intended to co-operate with the external threads 12" and 13", respectively. The internal threads 15" and 16" run in different directions, i.e. one of them is right hand threaded and the other one is left hand threaded, the first external thread 12" and the internal thread 15" co-operating therewith naturally being threaded in the same direction. The same is true for the second external thread 13" and the second internal thread 16". This means that when the clamping sleeve 14" is rotated in a certain direction, the sleeve 1" will be displaced towards the coupling part 5" and when the clamping sleeve 14" is rotated in the opposite direction, the sleeve 1" will be displaced away from the coupling part 5". Thus, it will be appreciated that instead of displacing the sleeve 1 with an external applied force, such as at the embodiments according to figs 2 and 3, said displacement of the sleeve 1" is achieved in the embodiment according to figs 5 and 7 by means of rotation of the clamping sleeve 14". In other respects, the clamping of the tool 9" works correspondingly as in the embodiments according to figs 2 and 3, i.e. the sleeve 1" is kept in place on the tool-receiving part 3" by the fact that the cone angle for the tool-receiving part 3 and the internal limiting wall 10" is so small that it is self-inhibiting. However, the presence of the clamping sleeve 14" constitutes an additional security so that the sleeve 1" is not unintentionally displaced when the chuck is in the active position.

The embodiment of the chuck according to the present invention shown in figs 6 and 8 is rather like the embodiment according to figs 5 and 7, the fundamental differences consisting of the fact that the recess 7''', in which the tool 9''' is received, has a larger axial extension, see fig 6, than the recess 7" according to fig 5 and that the tool-receiving part 3"' has axially extending slits 17'''.

The fact that the tool-receiving part 3''' in the area of the free end thereof has been equipped with slits 17''' ensures that the tool-receiving part 3''' as a whole is more flexible and that said part structurally seen consists of.a number of tongues, which may be brought to abutment against the tool 9''' by the fact that the sleeve 1" of the clamping sleeve 14" is moved on the tool-receiving part 3''' in the way which has been described above in connection with figs 5 and 7. The arrangement of the slits 17''', i.e. the increased flexibility of the tool-receiving part 3''', ensures that the thickness of the wall of the tool-receiving part 3''' may be increased, i.e. that said tool-receiving part 3''' generally becomes stiffer, without the clamping capacity acting on the tool 9''' being reduced.
Said increased flexibility of the tool-receiving part 3''' also ensures that tools may be used, even when their shank diameters have larger tolerances widths without reducing the chucking capacity.

What has been said above concerning size and choice of cone angle, applies generally for all tool-receiving parts 3; 3'; 3"; 3''' and the internal limiting walls 10; 10" of the above described embodiments. Generally, for all embodiments, also the tool-receiving part 3; 3'; 3"; 3''' is relatively thin-walled.

As for the choice of material for the chuck according to the present invention, it is preferably made of steel, but other materials are also feasible. For the sleeve 1; 1" which squeezes the tool-receiving part 3; 3'; 3"; 3''', for instance, metal matrix composites or other materials with a high modulus of elasticity in combination with a low weight may be used. This in order to reduce the mass forces which act on the tool-receiving part 3; 3'; 3"; 3"'at high rotational speeds. In the portion of the tool-receiving part 3; 3'; 3"; 3''' where the recess 7; 7'; 7"; 7''' is situated, i.e. the external cone-shaped portion, it is important to have a material with a high yield point. The coupling part 5; 5" should be produced from a hard material.

The shanks of the tools 9; 9'; 9"; 9''' which are to be clamped into the chuck according to the present invention have commonly an ISO tolerance degree of 6, but also other ISO tolerance degrees may be used, which specially may pertain to the embodiment according to figs 6 and 8. The embodiment of the external cone-shaped portion of the tool-receiving part 3; 3'; 3"; 3''' may be adjusted to the ISO tolerance degree in question by different angles, dimensions and possibly grooves therein in order to be able to carry a larger radial deformation.

Generally, also for the chuck according to the present invention, no oil needs be.used which reduces possible problems with leakage for the user.

### Feasible modifications of the invention

The embodiment shown in figs 6 and 8 has a tool-receiving part 3"' which is provided with slits 17'''. However, it also possible, within the scope of the invention, to consider that the other embodiments described above have axial slits in the tool-receiving part 3; 3'; 3".

## Claims

1. Chuck including a sleeve (1; 1"), a tool-receiving part (3; 3'; 3"; 3''') as well as a coupling part (5; 5'; 5"; 5'''), the tool-receiving part (3; 3'; 3"; 3''') and the coupling part (5; 5'; 5"; 5''') being made integrally, alternatively from a plurality of joined pieces, that the tool-receiving part (3; 3'; 3"; 3"'), in the area for the end thereof turned from the coupling part (5; 5"), has an axially extending recess (7; 7'; 7"; 7'''), which is intended to receive a tool (9; 9'; 9"; 9'''), and that the sleeve (1; 1") consists of a separate element, and that the tool-receiving part (3; 3'; 3''; 3''') in the area for the recess (7; 7'; 7"; 7'''), is externally conical and that an internal limiting wall (10; 10") of the sleeve (1; 1'') is conical **characterized in, that** the internal limiting wall (10; 10") of the sleeve (1; 1") abuts directly against the outside of the tool-receiving part (3; 3'; 3"; 3''') and that the cone angle for the tool-receiving part (3; 3'; 3"; 3''') and the internal limiting wall (10; 10") are substantially equally large and so small that it is self-inhibiting.

2. Chuck according to claim 1,
**characterized in, that** the cone angle is in the interval 0,3-15°, preferably in the interval 1-10°.

3. Chuck according to claim 1 or 2,
**characterized in, that** it comprises a clamping sleeve (14"), which is provided with two internal threads (15", 16") cut in different directions, that the sleeve (1") is provided with a first external thread (12") intended to co-operate with one of the interior threads (15") of the clamping sleeve (14"), and that the tool-receiving part (3"; 3''') is provided with a second external thread (13") intended to co-operate with the second interior thread (16") of the clamping sleeve (14").

4. Chuck according to any one of the preceding claims, **characterized in, that** the recess (7; 7") has an axial extension which does not extend past the transition section between the tool-receiving part (3; 3") and the coupling part (5; 5").

5. Chuck according to any one of claims 1-3, **characterized in, that** the recess (7'; 7''') has an axial extension which extends past the transition section between the tool-receiving part (3'; 3''') and the coupling part (5; 5").

6. Chuck according to any one of the preceding claims, **characterized in, that** the tool-receiving part (3; 3'; 3"; 3'''), in the portion where it is externally cone-shaped, is provided with axially extending slits (17''').

7. Chuck according to claim 6,
**characterized in, that** the slits (17''') have an axial extension which is shorter than the axial extension of the recess (7''').

8. Chuck according to claim 6,
**characterized in, that** the slits have an axial extension of the same order of magnitude as the axial extension of the recess.

## Patentansprüche

1. Spannfutter einschließlich einer Hülse 1; 1''), eines Werkzeugaufnahmeteils (3; 3'; 3"; 3''') als auch eines Kupplungsteils (5; 5'; 5''; 5'''), wobei der Werkzeugaufnahmeteil (3; 3'; 3"; 3"') und der Kupplungsteil (5; 5'; 5"; 5''') integrale Bestandteile sind, alternativ aus mehreren verbundenen Stücken bestehen, daß der Werkzeugaufnahmeteil (3; 3'; 3''; 3''') in dem Bereich des von dem Kupplungsteil (5; 5") abgewandten Endes eine sich axial erstrekkende Vertiefung (7; 7'; 7"; 7''') hat, welche dafür vorgesehen ist, ein Werkzeug (9; 9'; 9"; 9''') aufzunehmen, und daß die Hülse (1; 1'') aus einem separaten Element besteht und daß der Werkzeugaufnahmeteil (3; 3'; 3"; 3"') in dem Bereich für die Vertiefung (7; 7'; 7"; 7''') äußerlich kegelförmig ist, und daß eine innere Begrenzungswand (10; 10") der Hülse (1; 1'') kegelförmig ist, **dadurch gekennzeichnet, daß** die innere Begrenzungswand (10; 10") der Hülse (1; 1'') direkt an die Außenseite des Werkzeugaufnahmeteils (3; 3'; 3"; 3''') anstößt und daß der Kegelwinkel für den Werkzeugaufnahmeteil (3; 3'; 3"; 3''') und die innere Begrenzungswand (10; 10") im wesentlichen gleich groß und so gering ist, daß er selbsthindernd ist.

2. Spannfutter nach Anspruch 1, **dadurch gekennzeichnet, daß** der Kegelwinkel in dem Intervall von 0,3 - 15°, bevorzugt in dem Intervall von 1 - 10° liegt.

3. Spannfutter nach Anspruch 1 oder 2, **dadurch gekennzeichnet, daß** es eine Klemmhülse (14") umfaßt, die mit zwei Innengewinden (15", 16") versehen ist, die in unterschiedlichen Richtungen geschnitten sind, daß die Hülse (1") mit einem ersten Außengewinde (12") versehen ist, das dafür vorgesehen ist, mit einem der Innengewinde (15") der Klemmhülse (14") zusammenzuwirken, und daß der Werkzeugaufnahmeteil (3"; 3''') mit einem zweiten Außengewinde (13") versehen ist, das dafür vorgesehen ist, mit dem zweiten Innengewinde (16") der Klemmhülse (14") zusammenzuwirken.

4. Spannfutter nach einem der vorhergehenden Ansprüche, **dadurch gekennzeichnet, daß** die Vertiefung (7; 7") eine axiale Ausdehnung hat, welche sich nicht über den Übergangsbereich zwischen dem Werkzeugaufnahmeteil (3; 3") und dem Kupplungsteil (5; 5") hinaus erstreckt.

5. Spannfutter nach einem der Ansprüche 1 - 3, **dadurch gekennzeichnet, daß** die Vertiefung (7; 7") eine axiale Ausdehnung hat, welche sich über den Übergangsbereich zwischen dem Werkzeugaufnahmeteil (3; 3") und dem Kupplungsteil (5; 5") hinaus erstreckt.

6. Spannfutter nach einem der vorhergehenden Ansprüche, **dadurch gekennzeichnet, daß** der Werkzeugaufnahmeteil (3; 3'; 3"; 3"') in dem Abschnitt, wo er äußerlich kegelförmig ist, mit sich axial erstreckenden Schlitzen (17''') versehen ist.

7. Spannfutter nach Anspruch 6, **dadurch gekennzeichnet, daß** die Schlitze (17"') eine axiale Ausdehnung haben, welche kürzer ist als die axiale Ausdehnung der Vertiefung (7''').

8. Spannfutter nach Anspruch 6, **dadurch gekennzeichnet, daß** die Schlitze eine axiale Ausdehnung in der gleichen Größenordnung haben wie die axiale Ausdehnung der Vertiefung.

## Revendications

1. Mandrin comprenant une bague (1 ; 1''), une partie de réception d'outil (3 ; 3' ; 3'' ; 3''') de même qu'une partie d'accouplement (5 ; 5' ; 5'' ; 5'''), la partie de réception d'outil (3 ; 3' ; 3'' ; 3''') et la partie d'accouplement (5 ; 5' ; 5'' ; 5''') étant réalisées en une seule pièce, en variante par rapport à une pluralité de pièces liées, de sorte que la partie de réception d'outil (3 ; 3' ; 3'' ; 3'''), dans la zone de l'extrémité de celle-ci tournée à l'écart de la partie d'accouplement (5 ; 5'') comporte un évidement s'étendant axialement (7 ; 7' ; 7'' ; 7'''), lequel est prévu pour recevoir un outil (9 ; 9' ; 9'' ; 9'''), et de sorte que la bague (1 ; 1'') est constituée d'un élément séparé et que la partie de réception d'outil (3 ; 3' ; 3'' ; 3''') dans la zone pour l'évidement (7 ; 7' ; 7'' ; 7''') est conique extérieurement et qu'une paroi de limitation interne (10 ; 10'') de la bague (1 ; 1'') est conique, **caractérisé en ce que** la paroi de limitation interne (10 ; 10'') de la bague (1 ; 1'') bute directement contre l'extérieur de la partie de réception d'outil (3 ; 3' ; 3'' ; 3''') et que l'angle de cône de la partie de réception d'outil (3 ; 3' ; 3'' ; 3''') et de la paroi de limitation interne (10 ; 10'') ont sensiblement la même taille et sont suffisamment petits pour être autobloquants.

2. Mandrin selon la revendication 1, **caractérisé en ce que** l'angle de cône est dans l'intervalle de 0,3 à 15 degrés, de préférence dans l'intervalle de 1 à 10 degrés.

3. Mandrin selon la revendication 1 ou 2, **caractérisé en ce qu'**il comprend une bague de serrage (14'') qui est munie de deux taraudages (15'', 16'') taillés dans des sens différents, **en ce que** la bague (1'') est munie d'un premier filetage externe (12'') prévu pour coopérer avec l'un des taraudages (15'') de la bague de serrage (14'') et que la partie de réception d'outil (3'' ; 3''') est munie d'un second filetage externe (13'') prévu pour coopérer avec le second taraudage (16'') de la bague de serrage (14'').

4. Mandrin selon l'une quelconque des revendications précédentes, **caractérisé en ce que** l'évidement (7 ; 7'') présente une extension axiale qui ne s'étend pas au-delà de la section de transition entre la partie de réception d'outil (3 ; 3'') et la partie d'accouplement (5 ; 5'').

5. Mandrin selon l'une quelconque des revendications 1 à 3, **caractérisé en ce que** l'évidement (7' ; 7''') présente une extension axiale qui s'étend au-delà de la section de transition entre la partie de réception d'outil (3' ; 3''') et la partie d'accouplement (5 ; 5'').

6. Mandrin selon l'une quelconque des revendications précédentes, **caractérisé en ce que** la partie de réception d'outil (3 ; 3' ; 3'' ; 3''') dans la partie où elle est en forme de cône à l'extérieur, est munie de fentes s'étendant axialement (17''').

7. Mandrin selon la revendication 6, **caractérisé en ce que** les fentes (17''') présentent une extension axiale qui est plus courte que l'extension axiale de l'évidement (7''').

8. Mandrin selon la revendication 6, **caractérisé en ce que** les fentes présentent une extension axiale du même ordre de grandeur que l'extension axiale de l'évidement.
